Europäisches Patentamt

European Patent Office

Office européen des brevets

(19)

(11) Veröffentlichungsnummer: **0 133 894**
**B1**

(12)

# EUROPÄISCHE PATENTSCHRIFT

(45) Veröffentlichungstag der Patentschrift:
04.11.87

(21) Anmeldenummer: 84107287.9

(22) Anmeldetag: 25.06.84

(51) Int. Cl.⁴: **B 01 D 53/34**, F 27 D 17/00

(54) **Verfahren und Anlage zur Wiederaufwärmung von Rauchgasen hinter einer nassen Rauchgasentschwefelungsanlage.**

(30) Priorität: 06.07.83 DE 3324388

(43) Veröffentlichungstag der Anmeldung:
13.03.85 Patentblatt 85/11

(45) Bekanntmachung des Hinweises auf die Patenterteilung:
04.11.87 Patentblatt 87/45

(84) Benannte Vertragsstaaten:
AT DE GB NL

(56) Entgegenhaltungen:
DE-A-1 551 878
FR-A-796 565
US-A-3 386 798
US-A-3 520 649

**Die Akte enthält technische Angaben, die nach
dem Eingang der Anmeldung eingereicht wurden
und die nicht in dieser Patentschrift enthalten sind.**

(73) Patentinhaber: **Siemens Aktiengesellschaft Berlin
und München, Wittelsbacherplatz 2, D-8000
München 2 (DE)**

(72) Erfinder: **Engelhardt, Reiner, Kirchenhölzerstrasse
9, D-8521 Effeltrich (DE)**
Erfinder: **Wittchow, Eberhard, In der Reuth 72,
D-8520 Erlangen (DE)**

EP 0 133 894 B1

LIBER, STOCKHOLM 1987

## Beschreibung

Die Erfindung bezieht sich auf ein Verfahren und eine Anlage nach dem Oberbegriff des Patentanspruchs 1 bzw. 6. Ein solches Verfahren mit Anlage ist aus DE-A-1 551 878 bekannt.

In bekannten Anlagen zur nassen Rauchgasentschwefelung wird das Rauchgas verfahrensbedingt auf eine Rauchgasaustrittstemperatur von ca. 45° abgekühlt. Diese Temperatur liegt deutlich unter jener Temperatur, die unerläßlich ist, um den erforderlichen Auftrieb im Schornstein aufrecht zu erhalten. Sie liegt auch unter dem Taupunkt. Das der Rauchgasentschwefelungsanlage entströmende gereinigte Rauchgas, auch Reingas genannt, führt kleine angesäuerte Wassertröpfchen mit sich, die zu Korrosion in allen nachgeschalteten Bauteilen führen.

Um den Auftrieb im Schornstein zu verbessern und um die Wassertröpfchen in den Rauchgasen zu verdampfen ist es bekannt, die der Rauchgasentschwefelungsanlage entströmenden gereinigten, ca. 45° warmen Reingase mit Fremdenergie wieder aufzuheizen. Dabei müssen nicht unerhebliche Energiekosten aufgewendet werden.

Es ist auch bekannt, das der Rauchgasentschwefelungsanlage entströmende Reingas dadurch aufzuwärmen, daß ihm ein Teil des noch heißen, nicht entschwefelten Rauchgases unter Umgehung der Rauchgasentschwefelungsanlage, zugemischt werden. Dieses Verfahren ist relativ preisgünstig durchführbar. Es führt aber zu $SO_2$-Emissionswerten, die bei den meisten Kohlenarten über dem zulässigen Emissionswert liegt.

Es ist auch eine Anlage zum Wiederaufwärmen von Rauchgas hinter einer nassen Rauchgasentschwefelungsanlage bekannt geworden, bei der das Rauchgas zunächst durch einen Rauchgas-Luftvorwärmer, anschließend durch eine Rauchgasentstaubungsanlage und vor der Einleitung in eine Rauchgasentschwefelungsanlage nochmal über einen Rohgas-Reingaswärmetauscher geleitet werden. In diesem wird es zunächst auf etwa 60 bis 80° abgekühlt und nach der Rauchgasentschwefelung wieder auf ca. 90° aufgewärmt. Diese Anlage arbeitet mit nur geringen thermischen Verlusten und erzeugt auch einen ausreichend starken Auftrieb im Schornstein. Infolge der Unterschreitung des Taupunktes sind die Korrosion und die Verschmutzung im Rohgas-Reingaswärmetauscher jedoch erheblich.

Es ist auch schon vorgeschlagen worden, das Rauchgas über einen Rauchgas-Luftvorwärmer, einen Elektrofilter, einen Kaltluftvorwärmer in die Rauchgasentschwefelungsanlage zu leiten und dem so gereinigten in den Schornstein strömenden Reingas einen Teil der zuvor im Kaltluftvorwärmer und im Rauchgas-Luftvorwärmer vorgewärmten Frischluft beizumischen. Diese Anlage, die eine gute Ausnutzung der thermischen Energie der Rauchgase mit sich bringt, erfordert erhebliche Investitionen für die Erstellung der verschiedenen zusätzlichen Bauelemente. Infolge der Unterschreitung des Taupunktes ist aber auch hier im Kaltluftvorwärmer mit Korrosion zu rechnen.

Der Erfindung liegt die Aufgabe zugrunde, einen Weg zu weisen, wie das Rauchgas mit möglichst geringen Verlusten hinter einer nassen Rauchgasentschwefelungsanlage wiederaufgewärmt werden kann, ohne eines der hierzu verwendeten Bauteile korrodierenden Einflüssen auszusetzen.

Zur Lösung dieser Aufgabe hat ein Verfahren bzw. eine Anlage der eingangs erwähnten Art erfindungsgemäß die Merkmale des kennzeichnenden Teiles des Patentanspruchs 1 bzw. 6.

Hierdurch wird vermieden, daß die gereinigten und mit Wassertröpfchen versehenen Rauchgase mit Reizflächen aufgewärmt werden, die erfahrungsgemäß schnell verschmutzen und korrodieren. Zugleich werden gegenüber den vorbeschriebenen Anlagen der Kaltluftvorwärmer bzw. der Rohgas-Reingasvorwärmer eingespart.

Eine Steigerung des Gesamtwirkungsgrades bei der Wiederaufheizung von gereinigtem Rauchgas läßt sich erreichen, wenn in zweckmäßiger Weiterbildung der Erfindung ein Teil der aufgeheizten Frischluft vom Ausgang des Rauchgas-Luftvorwärmers an den Eingang des vom Drittmedium beheizten Wärmetauschers zurückgeführt wird. Dies hat eine erhöhte Lufteintrittstemperatur am luftseitigen Eingang des Rauchgas-Luftvorwärmers und/oder eine Einsparung der vom Drittmedium sonst einzubringenden Wärme zur Folge. Die erstgenannte Folge erlaubt es, die Rauchgase stärker abzukühlen, ohne daß dadurch der Taupunkt an Teilen des Rauchgas-Luftvorwärmers unterschritten wird.

Weitere Einzelheiten der Erfindung werden anhand mehrerer in den Figuren dargestellter Ausführungsbeispiele erläutert. Es zeigen:

Fig. 1 eine schematische Darstellung einer erfindungsgemäßen Anlage zur Wiederaufheizung von Rauchgasen hinter einer nassen Rauchgasentschwefelungsanlage,

Fig. 2 ein Diagramm der am Rauchgas-Luftvorwärmer der Fig. 1 herrschenden Temperaturverhältnisse,

Fig. 3 eine schematische Darstellung einer gegenüber der Einrichtung der Fig. 1 weitergebildeten Ausführungsform der Anlage und zur Wiederaufheizung von Rauchgasen hinter einer nassen Rauchgasentschwefelungsanlage und

Fig. 4 ein Diagramm der am Rauchgas-Luftvorwärmer der Fig. 5 herrschenden Temperaturverhältnisse.

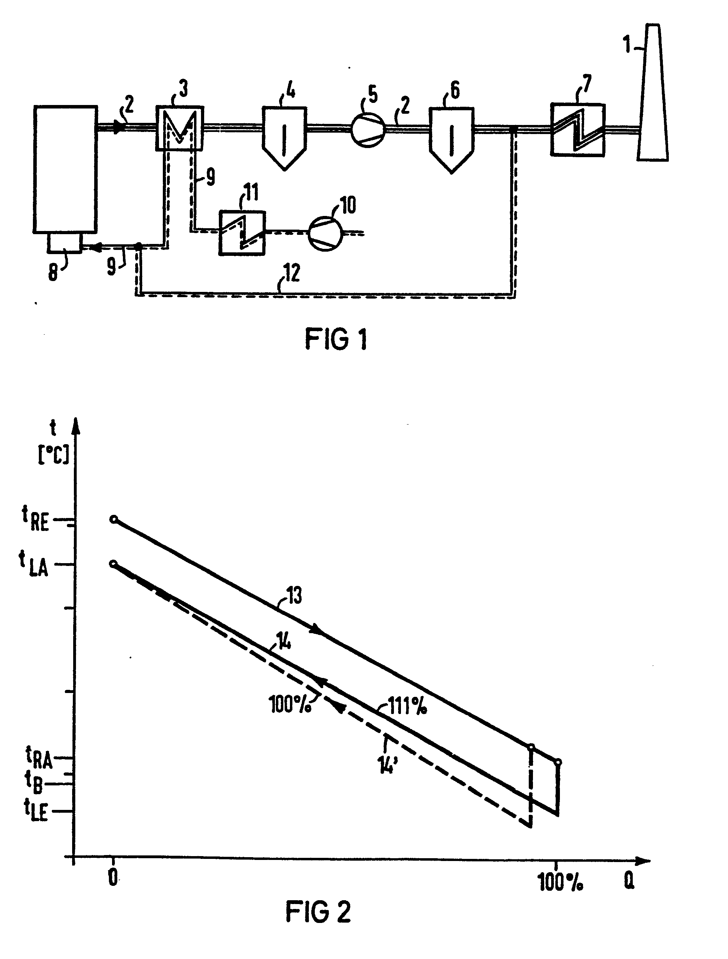

In der schematischen Darstellung der Fig. 1 erkennt man, daß in der zum Schornstein 1 führenden Rauchgasleitung 2 in

Strömungsrichtung des Rauchgases tn Serie hintereinander ein Drehluftvorwärmer 3 als Rauchgas-Luftvorwärmer, eine Rauchgas-Entstaubungsanlage 4, ein Saugzuggebläse 5, eine Rauchgasentschwefelungsanlage 6 und ein dampfbheizter, alternativ auch Rauchgas beheizter Hilfswärmetauscher 7 angeordnet sind. In der zur Brennkammer 8 führenden Frischluftleitung 9 sind ein Frischluftgebläse 10, ein dampfbeheizter Luftvorwärmer 11 und der Rauchgas-Luftvorwärmer 3 in Serie geschaltet. Von der Frischluftleitung 9, zwischen Drehluftvorwärmer 3 und Brennkammer 8, zweigt eine Heißluftleitung 12 ab, die in der Rauchgasleitung 2 zwischen Rauchgasentschwefelungsanlage 6 und Hilfswärmetauscher 7 mündet.

Bei dieser Anlage zur Wiederaufheizung von Rauchgas nach einer nassen Rauchgasentschwefelungsanlage wird das Rauchgas im Drehluftvorwärmer 3 beispielsweise von etwa 410° auf ca. 120° abgekühlt. Dieses abgekühlte Rauchgas wird vom Saugzuggebläse 5 durch das Entstaubungsfilter 4 und die nasse Rauchgasentschwefelungsanlage 6 befördert. In der nassen Rauchgasentschwefelungsanlage kühlt sich das Rauchgas verfahrensbedingt auf ca. 45°C ab. Dieser Wert liegt weit unterhalb des Taupunktes und auch unterhalb jener Temperatur, die für die Ausbildung eines ausreichenden Auftriebs im Schornstein 1 erforderlich ist. Die gleichzeitig vom Frischluftgebläse 10 angesaugte Frtschluft wird bei dieser Anlage in dem dampfbeheizten Luftvorwärmer 11 auf ca. 60 bis 70°C aufgeheizt und in den Drehluftvorwärmer 3 geleitet. Sie wird dort auf ca. 350°C aufgeheizt und gelangt mit dieser Temperatur in die Brennkammer 8. Etwa 11 % dieser aufgeheizten Frischluft wird über die Heißluftleitung 12 den der Rauchgasentschwefelungsanlage 6 entströmenden gereinigten Rauchgasen beigemischt und heizen diese dabei auf etwa 75°C auf. Dieser Wert liegt über dem Taupunkt und ermöglicht einen gerade noch ausreichenden Auftrieb im Schornstein 1.

Zur Verbesserung des Auftriebs im Schornstein kann bedarfsweise eine weitere Aufheizung des Rauchgases über den Hilfswärmetauscher 7 erfolgen. Hierzu kann der Abdampf einer Dampfturbine oder eines sonstigen Dampfverbrauchers oder vorgewärmtes Wasser oder heißes Rohgas in den Hilfswärmetauscher 7 eingespeist werden. Dabei besteht bei diesem Hilfswärmetauscher keine Korrosions- oder Verschmutzungsgefahr, weil bereits die Temperatur des einströmenden Rauchgases infolge der Heißluftbeimischung über dem Taupunkt liegt. Dieser Hilfswärmetauscher 7, in dem das Rauchgas mit der Abwärme aus dem 20 Kraftwerk auf über 100°C aufgeheizt werden kann, gewährleistet beim Anfahren der Anlage und in Zeiten niedriger Last einen ausreichenden Auftrieb im Schornstein 1.

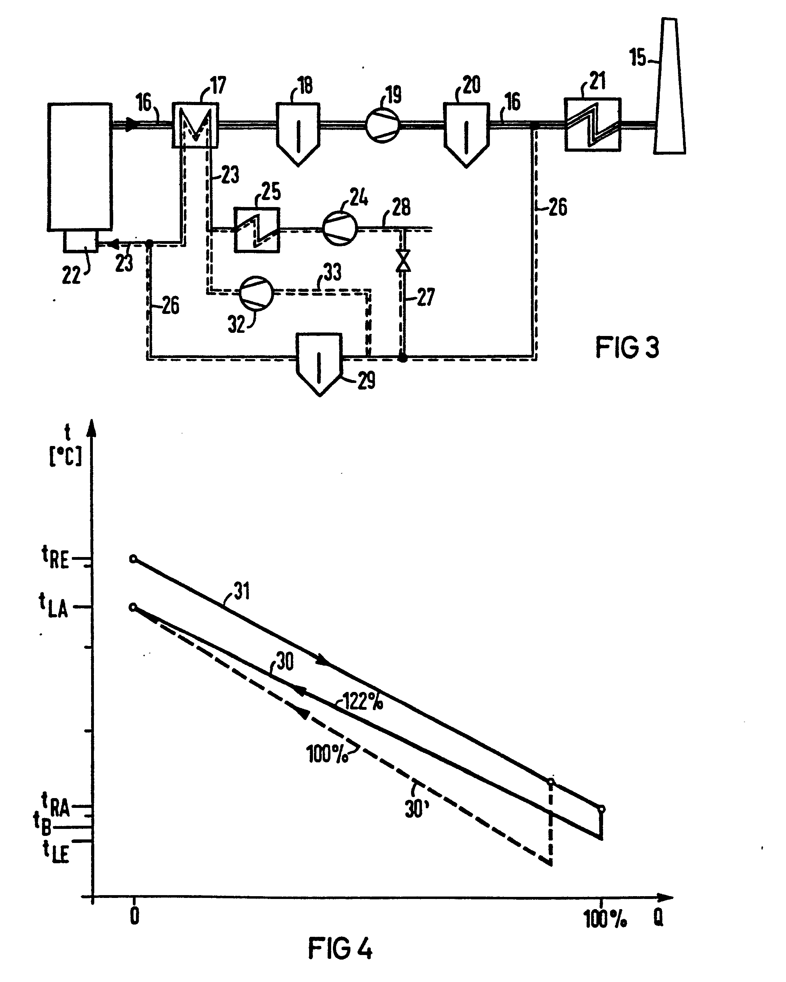

Die Fig. 2 zeigt die Temperatur ϑ in Abhängigkeit von der übertragenen Wärmemenge Q im Drehluftvorwärmer 3 der Fig. 1. In ihm strömt das Rauchgas 13 gegenläufig zur Frischluft 14. Im Normalfall, d.h. wenn im Rauchgasluftvorwärmer nur die Verbrennungsluft aufgewärmt wird, die zur Brennkammer 8 strömt - siehe gestrichelte Kurve 14' der Fig. 2 und Kurve 30' der Fig. 4 -, dann ist die Temperaturdifferenz zwischen Rauchgas und Luft auf der heißen Seite des Rauchgas-Luftvorwärmers stets deutlich kleiner als auf der kalten Seite. Die Frischluft heizt sich wegen ihres kleineren Wasserwert, d.h. dem Produkt von Massenstrom und spezifischer Wärme, schneller auf als sich das Rauchgas 13 abkühlt. Im Ausführungsbeispiel der Fig. 1 wird dagegen wegen der Zumischung von Heißluft in das Reingas 111% der Verbrennungsluft in den Drehluftvorwärmer geleitet. Hier tritt das Rauchgas 13 mit einer Temperatur $t_{RE} = 410°C$ in den Drehluftvorwärmer 3 ein und verläßt ihn mit einer Temperatur $t_{RA} = 120°C$. Die Frischluft 14 wird in den Drehluftvorwärmer 3 mit einer Temperatur von $t_{LE} = 60°C$ eingeleitet und verläßt ihn mit einer Austrittstemperatur $t_{LA} = 350°C$. Die Steilheit der beiden Temperaturkurven 13 und 14 ist noch unterschiedlich.

Mit $t_B$ ist in der Figur 2 die für die Korrosion wesentliche Blechtemperatur auf der kalten Seite des Drehluftvorwärmers angegeben. Sie liegt etwa in der Mitte zwischen der Lufteintrittstemperatur $t_{LE}$ und der Rauchgasaustrittstemperatur $t_{RA}$ und gehorcht daher etwa der Gleichung

$$t_B = \frac{t_{LE} + t_{RA}}{2}.$$

Diese Blechtemperatur darf - will man Korrosion und Verschmutzungen vermeiden - nicht unterhalb des Taupunktes liegen und sollte daher im allgemeinen 90°C nicht unterschreiten. Das hat zur Folge, daß man das Rauchgas bei einer Lufteintrittstemperatur von 60°C nicht unter 120°C abkühlen darf. Würde man, wie in Fig. 2 punktiert angedeutet ist, die Frischluft ohne Vorwärmung mit ca. 45°C in den Drehluftvorwärmer 3 einströmen lassen, so dürfen die Rauchgase nicht unter 135°C abgekühlt werden, weil sonst die Blechtemperatur $t_B$ am kalten Ende des Drehluftvorwärmers unter 90°C fallen würde. Die Abgasverluste sind aber bekanntlich umso kleiner, je mehr Wärme den Rauchgasen entzogen wird bevor sie in die Rauchgasentschwefelungsanlage eintreten. Aus diesem Grunde wird der vom Drittmedium beheizte Luftvorwärmer 11 dazu benutzt, um den Rauchgasen im Drehluftvorwärmer 3 mehr Wärme entziehen zu können. ohne den Taupunkt zu unterschreiten.

Die Figur 3 zeigt eine gegenüber dem Ausführungsbeispiel der Figur 1 etwas abgeänderte Anlage zur Wiederaufwärmung des Rauchgases hinter einer nassen Rauchgasentschwefelungsanlage. Auch bei dieser Anlage sind in der zum Schornstein 15 führenden Rauchgasleitung 16 in Serie hintereinander ein Drehluftvorwärmer 17 als Rauchgas-Luftvorwärmer, eine Rauchgasentstaubungsanlage 18, ein Saugzuggebläse 19, eine Rauchgasentschwefelungsanlage 20 und ein dampf- oder rauchgasbeheizter Hilfswärmetauscher 21 angeordnet. Auch frischluftseitig sind in der zur Brennkammer 22 führenden Frischluftleitung 23 in Serie ein Frischluftgebläse 24, ein dampfbeheizter Luftvorwärmer 25 und der Drehluftvorwärmer 17 angeordnet. Von der Frischluftleitung 23 zwischen Drehluftvorwärmer und Brennkammer zweigt eine Heißluftleitung 26 ab, die in die von der Rauchgasentschwefelungsanlage 20 zum Hilfswärmetauscher 21 führende Rauchgasleitung 16 einmündet. Im Unterschied zur Anlage gemäß Figur 1 enthält die Heißluftleitung 26 jedoch eine Heißluftrückführungsleitung 27, die in den Ansaugkanal 28 des Frischluftgebläses 24 mündet. Außerdem ist in der Heißluftleitung 26 eine zweite Entstaubungsanlage 29 eingebaut.

Bei dieser Anlage zur Wiederaufwärmung von Rauchgas wird dem Rauchgas im Drehluftvorwärmer 17 - ähnlich wie das schon anhand des Ausführungsbeispiels der Figur 1 beschrieben wurde - zunächst Wärme entzogen. Dafür wird später nach der Entstaubung und Entschwefelung dem Reingas heiße Frischluft zugemischt und seine Temperatur so über dem Taupunkt angehoben. Diesem wiederaufgewärmten Reingas kann daher über den Hilfswärmetauscher 21 gefahrlos weitere Wärme zur Steigerung des Auftriebs im Schornstein zugeführt werden.

Im Unterschied zum Ausführungsbeispiel der Figur 1 wird jedoch ein Teil der erzeugten Heißluft in den Ansaugkanal 28 des Frischluftgebläses 24 zurückgeleitet. Auf diese Weise wird die Frischluft bereits ansaugseitig aufgewärmt. Der Frischluftdurchsatz durch den dampfbeheizten Luftvorwärmer 25 und den Drehluftvorwärmer 17 ist um diesen rezirkulierenden Heißluftanteil vergrößert. Dies hat, wie das Diagramm in Fig. 4 zeigt zur Folge, daß die nunmehr gegenüber dem Ausführungsbeispiel der Fig. 1 und 2 um ca. 11% vermehrt in den Drehluftvorwärmer 17 einströmende Frischluft 30 bei unveränderter Rauchgasmenge weniger schnell aufgeheizt wird. Das heißt, die Frischlufttemperaturkurve verläuft in der Fig. 4 weniger steil, wie in der Fig. 2. Bei entsprechender Vergrößerung des rezirkulierenden Frischluftstroms kann sie gleich steil oder sogar etwas flacher werden als die Temperaturkurve des gegenläufig strömenden Rauchgases 31.

Geht man im Ausführungsbeispiel der Fig. 4 wiederum von einer Rauchgaseintrittstemperatur $t_{RE} = 410°C$ und einer Frischluftaustrittstemperatur $t_{LA}$ von 350° aus, so liegt die Rauchgasaustrittstemperatur $t_{RA}$ und die Frischlufteintrittstemperatur $t_{LE}$ näher beieinander. Bei einer Blechtemperatur $t_B = 90°C$ führt das zu einer Lufteintrittstemperatur von $t_{LE} = 70°C$ und zu einer Rauchgaseintrittstemperatur $t_{RA} = 110°C$. Das heißt, es kann dem Rauchgas gegenüber dem Ausführungsbeispiel der Fig. 1 und 2 mehr Wärme entzogen werden, ohne daß die Blechtemperatur 90°C und damit den Taupunkt unterschreitet. Diese stärkere Abkühlung des Rauchgases im Drehluftvorwärmer 17 führt jedoch zu einem vergrößerten Wirkungsgrad der Gesamtanlage, weil durch die bessere Ausnutzung der Rauchgaswärme die Beheizung des Luftvorwärmers 25 durch das Drittmedium vermindert werden kann. Die in der Heißluftleitung 26 eingebaute Rauchgasentstaubungsanlage 29 dient dazu, jene im Drehluftvorwärmer 17 von der Rauchgasseite auf die Luftseite transportierte Asche wieder zu entfernen.

Bei der in der Fig. 3 gezeigten Anlage zur Wiederaufwärmung von Rauchgas kann anstelle der Heißluftrückführungsleitung 27 die gestrichelte, mit einem Gebläse 32 versehene Heißluftrückführungsleitung 33 verwendet werden. Bei dieser Konstruktion steht einem verbesserten Wärmeübergang im Luftvorwärmer 25 der vermehrte Aufwand für das Gebläse 32 gegenüber.

**Patentansprüche**

1. Verfahren zur Wiederaufwärmung von Rauchgas hinter einer nassen Rauchgasentschwefelungsanlage unter Zumischung von in einem Rauchgas-Luftvorwärmer von dem in die Rauchgasentschwefelungsanlage strömenden Rauchgas aufgewärmter Frischluft zum entschwefelten Rauchgas, dadurch gekennzeichnet, daß die dem Rauchgas-Luftvorwärmer (3, 17) zugeführte Frischluft in einem Wärmetauscher (11, 25) von einem Drittmedium vorgewärmt und die Temperatur des in die Rauchgasentschwefelungsanlage (6) eintretenden Rauchgases auf einen Wert größer als der Taupunkt gebracht wird.

2. Verfahren nach Anspruch 1, dadurch gekennzeichnet, daß ein Teil der aufgeheizten Frischluft vom Ausgang des Rauchgas-Luftvorwärmers (3, 17) an den Eingang des vom Drittmedium beheizten Wärmetauschers (11, 25) zurückgeführt wird.

3. Verfahren nach Anspruch 1, dadurch gekennzeichnet, daß das Rauchgas in dem Rauchgas-Luftvorwärmer (3, 17) auf eine Temperatur im Bereich von 100 bis 130°C abgekühlt wird.

4. Verfahren nach Anspruch 1, dadurch gekennzeichnet, daß etwa 8 bis 25 % der aufgeheizten Verbrennungsluft dem entschwefelten Rauchgas zur Wiederaufwärmung beigemischt wird.

5. Verfahren nach Anspruch 1, dadurch gekennzeichnet, daß ein Teil der aufgeheizten Frischluft vom Ausgang des Rauchgas-Luftvorwärmers (17) über eine Heißluftrückführungeleitung (32, 33) in dessen luftseitigen Eingang zurückgeleitet wird.

6. Anlage zur Durchführung des Verfahrens nach Anspruch 1 mit einem einzigen, die Rauchgase abkühlenden Rauchgas-Luftvorwärmer, einer nassen Rauchgasentschwefelungsanlage und einem Schornstein, die in einer Rauchgasleitung in Serie hintereinander geschaltet sind, und mit einem Frischluftgebläse, das in einer Frischluftleitung mit dem Rauchgas-Luftvorwärmer und einer Brennkammer in Serie geschaltet ist, wobei eine von der Frischluftleitung zwischen dem Rauchgas-Luftvorwärmer und der Brennkammer abzweigende Heißluftleitung in die Rauchgasleitung zwischen der Rauchgasentschwefelungsanlage und dem Schornstein mündet, dadurch gekennzeichnet, daß in der Frischluftleitung (9, 23) ein über ein Drittmedium beheizter Wärmetauscher (11, 25) mit dem Frischluftgebläse (10, 24), dem Rauchgas-Luftvorwärmer (3, 17) und der Brennkammer (8, 22) in Serie liegt.

7. Anlage nach Anspruch 6, dadurch gekennzeichnet, daß eine zur Saugleitung (28) des Luftverdichters (24) zurückführende Rezirkulationsleitung (27) an der Heißluftleitung (26) angeschlossen ist.

8. Anlage nach Anspruch 6, dadurch gekennzeichnet, daß dem Schornstein (1, 15) ein über ein Drittmedium beheizter Hilfswärmetauscher (7, 21) unmittelbar vorgeschaltet ist.

9. Anlage nach Anspruch 8, dadurch gekennzeichnet, daß das Rauchgas in dem Hilfswärmetauacher (7, 21) auf 80 bis 120°C aufgeheizt wird.

10. Anlage nach Anspruch 6, dadurch gekennzeichnet, daß eine Rauchgasentataubungsanlage (29) bei der Verwendung eines Drehluftvorwärmers (17) als Rauchgas-Luftvorwärmer in der Heißluftleitung (26) eingebaut ist.

## Claims

1. A method of reheating flue gas after wet desulphurisation by mixing the desulphurised flue gas with fresh air heated in a flue gas-air heater by flue gas flowing to the desulphurisation installation, characterised in that the fresh air introduced into the flue gas-air heater (3, 7) is preheated in a heat exchanger (11, 25) by a third medium and the temperature of the flue gas entering the flue gas desulphurisation installation (6) is brought to a value which is higher than the dew point.

2. A method as claimed in Claim 1, characterised in that a part of the heated fresh air is led back from the exit of the flue gas-air heater (3, 17) to the inlet of the heat exchanger (11, 25) which is heated by the third medium.

3. A method as claimed in Claim 1, characterised in that the flue gas is cooled in the flue-gas air heater (3, 7) to a temperature in the range of 100 to 130°C.

4. A method as claimed in Claim 1, characterised in that about 8 to 25% of the heated air for combustion is added to the desulphurised flue gas for reheating purposes.

5. A method as claimed in Claim 1, characterised in that a part of the heated fresh air is led back from the exit of the flue gas-air heater (17) through a hot-air return line (32, 33) to the inlet of the flue gas-air heater on the air side.

6. Apparatus for carrying out the method according to Claim 1, comprising a single flue gas-air heater which cools the flue gases, a wet desulphurisation installation and a chimney, which are connected in series one behind the other in a flue gas line, and comprising a fresh air blower, which is connected in series with the flue gas-air heater and a combustion chamber in a fresh air line, wherein a hot-air line branching off from the fresh air line between the flue gas-air heater and the combustion chamber opens into the flue gas line between the flue gas desulphurisation installation and the chimney, characterised in that in the fresh air line (9, 23), a heat exchanger (11, 25) heated by a third medium is in series with the fresh air blower (10, 24), the flue gas-air heater (3, 17) and the combustion chamber (8, 22).

7. Apparatus as claimed in Claim 6, characterised in that a recycle line (27) leading back to the suction line (28) of the air compressor (24) is connected.

8. Apparatus as claimed in Claim 6, characterised in that an auxiliary heat exchanger (7, 21) heated by means of a third medium is connected immediately before the chimney (1, 15).

9. Apparatus as claimed in Claim 8, characterised in that the flue gas is heated in the auxiliary heat exchanger (7, 21) to 80 to 120°C.

10. Apparatus as claimed in Claim 6, characterised in that a flue gas dust removal device (29) is installed in the hot air duct (26) using a rotary air heater (17) as flue gas-air preheater.

## Revendications

1. Procédé de réchauffage du gaz de fumée en aval d'une installation de désulfuration du gaz de fumée par voie humide, avec addition au gaz de fumée à désulfurer d'air frais réchauffé dans un préchauffeur gaz de fumée-air, par le gaz de fumée provenant de l'installation de désulfuration des gaz de fumée, caractérisé en ce qu'il consiste à préchauffer, dans un échangeur de chaleur (11, 25) et par un milieu tiers, l'air frais envoyé au préchauffeur gaz de fumée-air (3, 17) et à porter la température du gaz de fumée pénétrant dans l'installation de désulfuration du gaz de fume (6) à une valeur supérieure au point de rosée.

2. Procédé suivant la revendication 1, caractérisé en ce qu'il consiste à retourner une partie de l'air frais préchauffé de l'entrée du préchauffeur gaz de fumée-air (3, 17) à l'entrée de l'échangeur de chaleur (11, 25) chauffé par le milieu tiers.

3. Procédé suivant la revendication 1, caractérisé en ce qu'il consiste à refroidir le gaz de fumée dans le préchauffeur gaz de fumée-air (3, 17) à une température comprise entre 100 et 130°C.

4. Procédé suivant la revendication 1, caractérisé en ce qu'il consiste, pour le réchauffage, à mélanger environ 8 à 25 % de l'air de combustion chauffé au gaz de fumée désulfuré.

5. Procédé suivant la revendication 1, caractérisé en ce qu'il consiste à retourner une partie de l'air frais chauffé de la sortie du préchauffeur gaz de fumée-air (17) à l'entrée du côté de l'air d'un conduit de recyclage d'air chaud (32, 33) en passant par celui-ci.

6. Installation pour la mise en oeuvre du procédé suivant la revendication 1 comprenant un préchauffeur gaz de fumée-air unique refroidissant les gaz de fumée, une installation de désulfuration des gaz de fumée par voie humide et une cheminée qui sont montés en série les uns derrière les autres dans un conduit pour le gaz de fumée, et une soufflante d'air frais qui est montée en série dans un conduit pour l'air frais avec le préchauffeur gaz de fumée-air et avec une chambre de combustion, un conduit pour de l'air chaud en dérivation du conduit pour l'air frais entre le préchauffeur gaz de fumée-air et la chambre de combustion débouchant dans le conduit pour le gaz de fumée entre l'installation de désulfuration des gaz de fumée et la cheminée, caractérisée en ce que, dans le conduit pour l'air frais (9, 23), est monté un échangeur de chaleur (11, 25) chauffé par un milieu tiers, en série avec la soufflante d'air frais (10, 24), le préchauffeur gaz de fumée-air (3, 17) et la chambre de combustion (8, 22).

7. Installation suivant la revendication 6, caractérisée en ce qu'un conduit de recirculation (27) ramenant au conduit d'aspiration (28) du compresseur d'air (24) est raccordé au conduit pour l'air chaud (26).

8. Installation suivant la revendication 6, caractérisée en ce qu'immédiatement en amont de la cheminée (1, 15) est monté un échangeur de chaleur auxiliaire (7, 21) chauffé par un milieu tiède.

9. Installation suivant la revendication 8, caractérisée en ce que le gaz de fumée est porté entre 80 et 120°C, dans l'échangeur de chaleur (7, 21) auxiliaire.

10. Installation suivant la revendication 6, caractérisée en ce qu'une installation de dépoussiérage des gaz de fumée (29) est montée dans le conduit pour l'air chaud (26) lors de l'utilisation d'un préchauffeur d'air (I7) comme préchauffeur gaz de fumée-air.

FIG 1

FIG 2

FIG 3

FIG 4